# EUROPEAN PATENT SPECIFICATION

(11) **EP 1 982 586 B1**
(45) Date of publication and mention of the grant of the patent: **07.04.2010**
(21) Application number: 08380027.6
(22) Date of filing: 04.02.2008
(51) Int. Cl.: A01K 47/04, B29C 43/22, B29D 99/00

(54) **Method and corresponding device for manufacturing honeycombs for beekeeping**
Verfahren und Vorrichtung zur Herstellung von Wabenstrukturen für die Bienenzucht
Procédé et dispositif pour la fabrication de nids d'abeilles pour l'apiculture

(30) Priority: 30.03.2007 ES 200700845
(43) Date of publication of application: 22.10.2008
(73) Proprietor: Breat, S.L., 08850 Gava (Barcelona) (ES)
(72) Inventor: Ferrer Vidal, Carlos, 08015 Barcelona (ES)
(74) Representative: Durán Moya, Luis-Alfonso

(56) References cited:
- EP-A- 0 893 234
- EP-A- 1 072 187

## Description

The present invention relates to a method and a corresponding device for manufacturing honeycombs for beekeeping, thereby significantly improving on what is known at present.

The applicant himself has previously produced various inventions relating to the manufacture of honeycombs for beekeeping, with the aim of replacing the natural work of the bees in the preparation of their own honeycombs with mechanical and industrial methods whereby honeycombs are produced using liquid wax which is introduced into suitable moulds in the form of laminar strips or belts of resilient material with shaping cores, which are displaced over rollers forming a closed circuit, so the wax is poured continuously at one end of the device, the honeycombs are shaped as the liquid wax is introduced between the cores of the laminar elements and the honeycomb cools gradually until, upon reaching the device outlet, it is removed and cut, thus allowing a synthetic honeycomb element, which will be used to fill beehives, to be obtained. This technology is what the inventor disclosed in Spanish Patents 9600019, 9701564 and Patent of Addition 9801156, and EP 1 072 187.

However, in seeking a considerable thinning of the walls of the honeycomb so that their cost is comparable to that of natural honeycombs, breakage problems in the cell walls arose. The inventor therefore carried out tests and experiments in order to obtain wax honeycombs with very thin walls, while at the same time preventing the breakage thereof, and thus achieving the present invention.

In order to achieve its objects, the present invention comprises a method according to claim 1 for manufacturing wax honeycombs for beekeeping, which consists of subjecting strips carrying resilient moulds, during their travel from the point where the wax is introduced to the point where the manufactured honeycombs are removed, to a different method of removal of the strips carrying the resilient cores, so that the lower strip is removed independently simply by bending it over the end roller and removing it from the manufactured honeycomb and a completely separate removal process being carried out for the upper strip, which is subjected to pulsating magnetic fields throughout its travel. Thus, it is possible, on the one hand, to remove the lower strip without breaking the thin walls of the honeycomb and, on the other hand, gradually to remove the upper strip owing to the effect of the pulsating magnetic fields. A significant improvement in the manufacture of honeycomb has therefore been achieved, both in successfully reducing the thickness of the walls and in preventing the walls from breaking. The method also comprises the inclusion of iron powder on the resilient cores which form part of the upper and lower continuous strips of the machine, thereby rendering the magnetic effect of the pulsating fields more effective.

The apparatus for carrying out the method according to the invention comprises an apparatus according to claim 4 with an arrangement of a plurality of successive sets of electromagnets disposed along the end portion of the path of the upper belt or strip and preferably located in parallel, with its nucleus perpendicular to the direction of advance of the strip. Each set of magnets comprises an elongated central nucleus and two side supports with a determined spacing, the length of which approximates to the width of the strap, which the belt carrying the resilient cores has on its outer face. The lateral supports are in continuous contact with the strap of the upper strip, whilst the central nucleus or electromagnet is set slightly apart to allow the action of traction to be translated into a substantial short bend in the strap. Said short and relatively significant bend is necessary to remove the honeycomb being made from the resilient cores, since very gentle bending would not allow the honeycomb to be removed from the resilient silicone cores, given the flexibility of the wax. The magnetic field circulates from the lateral supports towards the central nucleus, passing via the strap of the upper belt and also via the silicone cores with iron powder. The device comprises elements for cooling the components of the electromagnet.

For a better understanding, a preferred embodiment of the present invention is illustrated by way of an explanatory but not limiting example in the accompanying drawings in which:

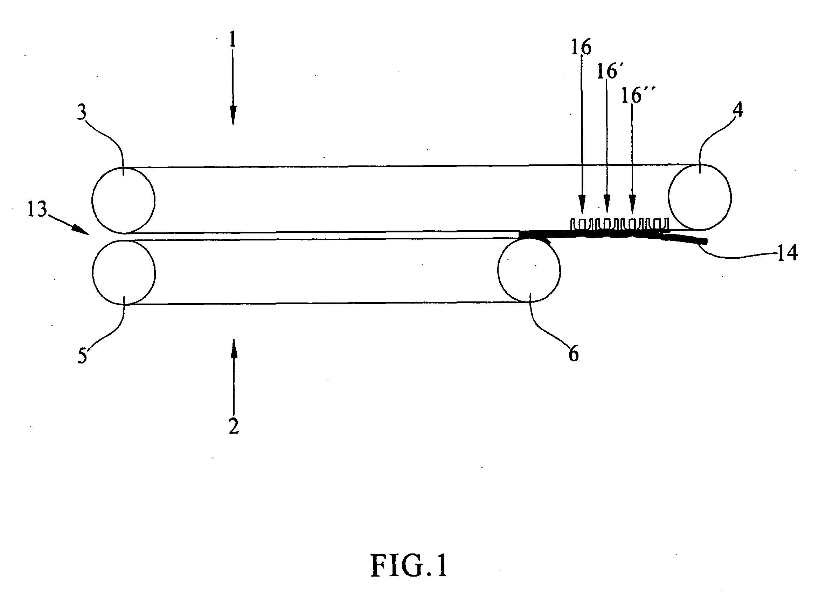

Figure 1 shows a schematic view of the device for carrying out the method according to the invention.
Figure 2 shows, schematically, removal of the metal belt carrying the silicone cores which correspond to the lower face of the honeycomb.
Figures 3, 4 and 5 each show schematic views of the gradual action of the pulsating electromagnets for extraction of the upper belt.
Figures 6, 7 and 8 show schematic views of the relative position of the cores and the honeycomb respectively, which correspond to the positions illustrated in Figures 3, 4 and 5.

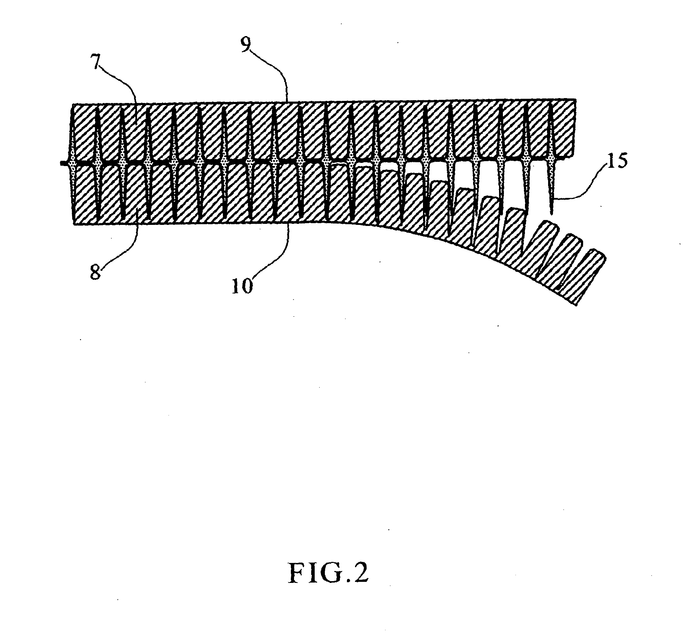

As is illustrated in the figures and has been disclosed in the applicant's earlier patents, honeycombs are manufactured using two endless belts 1 and 2 of an elastomer such as silicone or the like, each mounted on a pair of rollers 3, 4 and 5, 6, said belts each being provided with honeycomb-forming core assemblies, such as those denoted by reference numerals 7 and 8 in Figure 2. Said belts 1 and 2 each have metal strips 9 and 10 on their outer faces. The method comprises the feeding of liquid wax from the end 13 and the outputting of a continuous honeycomb 14 at the other end, which will be cut to the desired length.

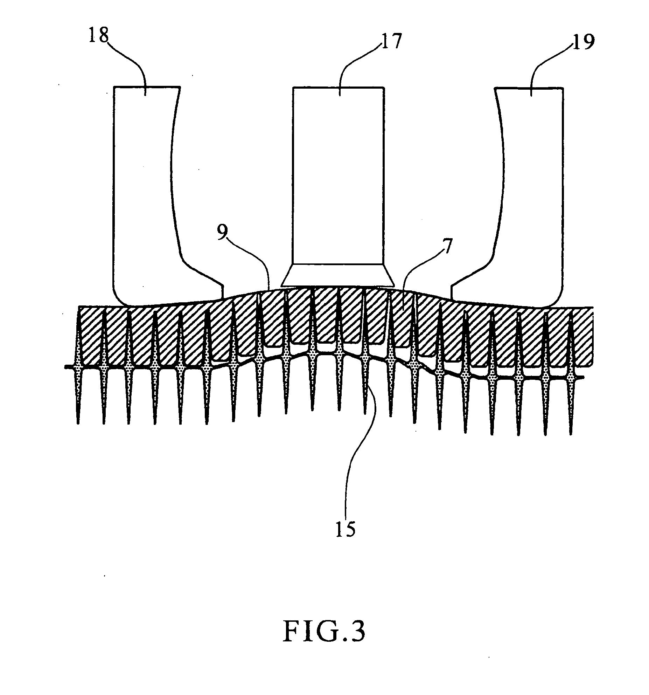

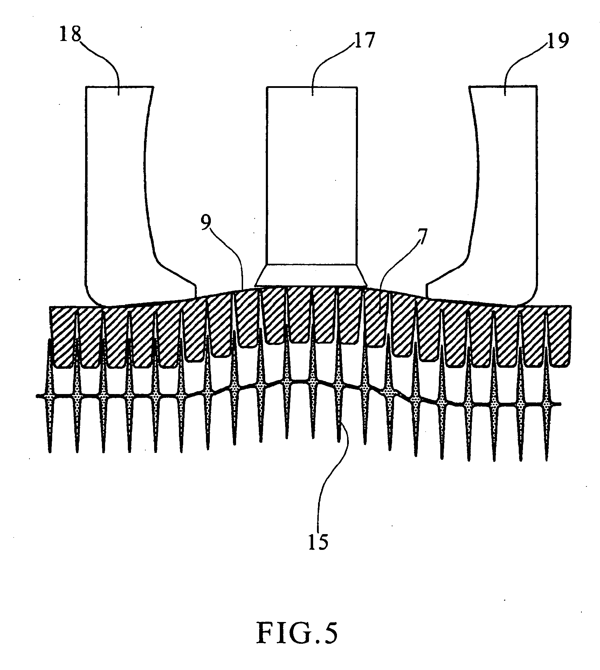

In accordance with the method of the present invention, removal of the resilient belts formed by the rows of silicone cores is carried out differently for the lower run and for the upper run. Figure 2 shows the removal of the metal belt of the lower part corresponding to the strap 10, by simply gradually bending the metal belt, the bend which will depend on the end roller 6, thus gradually removing the belt from the now manufactured honeycomb 15. However, for the upper strip, removal is carried out by means of a plurality of sets of electromagnets as represented by reference numerals 16, 16', 16", etc. which act on the upper belt, creating pulsating magnetic fields which gradually remove the upper belt from the honeycomb 15 after removal of the lower belt. Figures 3, 4 and 5 show a set of electromagnets, formed by a central electromagnet nucleus 17 and two supports, one on each side, 18 and 19 and this enables the magnetic field to be closed from the lateral supports 18 and 19 to the nucleus 17, which is slightly more set apart than said lateral supports in relation to the strip 9, the magnetic flux passing via the strip 9 and via the silicone cores 7 which have iron powder on their inside in order to enable said operation.

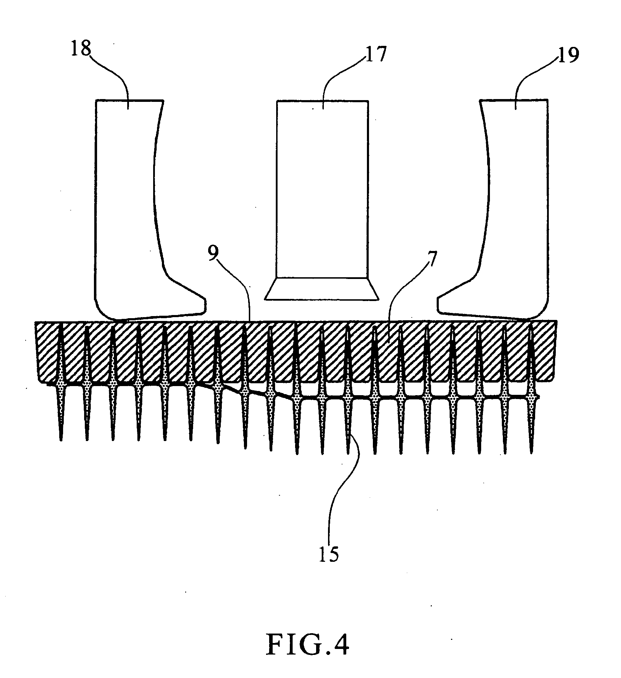

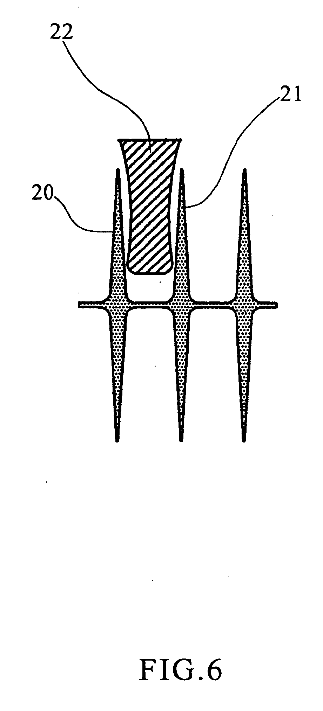

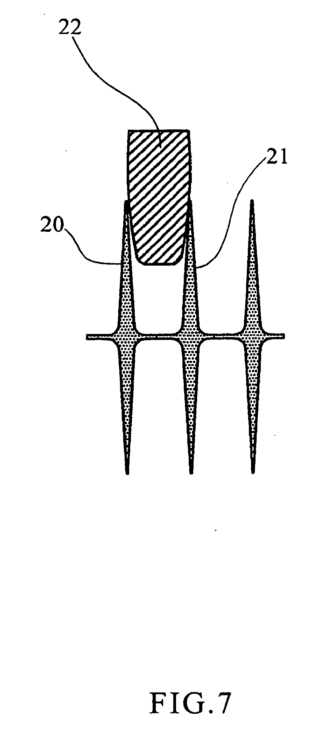

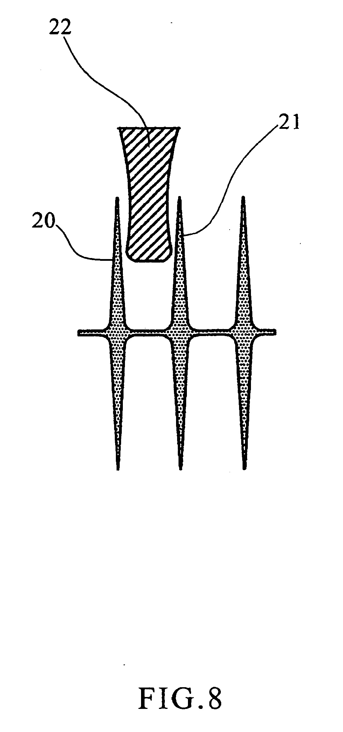

Bending in the form of short, relatively accentuated curves by action of the pulsating magnetic fields gradually releases the belts of silicone cores from the recently made honeycomb, without breaking the thin honeycomb walls. The gradual operation is illustrated in Figures 6, 7 and 8 where a fragment of the honeycomb is shown with two successive walls 20 and 21 and a core 22, Figure 6 illustrating the shrinking of the core 22 once the belt is bent by the effect of the electromagnet, the core 22 returning to its normal shape when the magnetic field is at rest, as illustrated in Figure 7, which corresponds to Figure 4 and finally being removed during a later cycle, as can be seen in Figure 8 in which the core 22, having shrinked again, starting from a position partially extracted from the honeycomb finally removes itself from the honeycomb.

Thus the belts carrying the silicone cores are removed effectively and gradually, without breaking the walls of the honeycombs, which can be produced with reduced thicknesses, thereby significantly saving raw material and significantly approximating to the thicknesses of natural honeycombs.

Although the invention has been described in relation to the specific embodiment which has been illustrated, it will be understood that multiple variants of said embodiment are possible and will be included in the scope of the invention if they correspond to the accompanying claims.

## Claims

1. Method for manufacturing honeycombs for beekeeping, of the type in which honeycombs are produced from liquid wax which is fed to a set of two endless belts (1,2) carrying mutually spaced resilient silicone (7) cores which determine the cells and the walls (20, 21) of the honeycomb, allowing it to be cut at the end, once the honeycombs have cooled down, **characterised in that** the belts (1,2) carrying the silicone cores (7) are removed differently from the manufactured honeycomb, by simply bending one of the belts corresponding to one of the honeycomb faces and by the gradual action of pulsating magnetic fields on the other of the belts carrying the silicone cores (7), the honeycomb gradually being removed without breakage of the walls thereof.

2. Method according to claim 1, **characterised in that** removal of the belt (1) by means of pulsating magnetic fields is carried out after removal of the belt (1) corresponding to the opposite face of the honeycomb.

3. Method according to claim 1, **characterised in that** the belt which receives the pulsating electric fields is the upper belt of the honeycomb, in the zone where it advances from the zone matching the lower belt.

4. Device for manufacturing honeycomb for beekeeping with a method according to claim 1, **characterised in that** it comprises a row of electromagnets (16, 16', 16") which act on a belt (1) carrying resilient cores (7) to be removed and which exert an action of pulsating magnetic fields thereon, thereby gradually removing the belt from the honeycomb.

5. Device for manufacturing honeycombs for beekeeping according to claim 4, **characterised in that** each of the sets of electromagnets has a central nucleus (17) and two lateral supports (18, 19), the central nucleus (17) being slightly more set apart from the belt (1) than the lateral supports, to allow the belt (1) to be bent transversely by the effect of the magnetic field.

6. Device for the manufacture of honeycombs for beekeeping, according to claim 4, **characterised in that** the resilient belt (1) is provided with a laminar metal (9) strap on the face opposite the magnets and is provided with an iron powder which is embedded in the mass of silicone cores (7), in order to improve the action of the magnetic fields.

## Patentansprüche

1. Verfahren zum Herstellen von Wabenstrukturen für die Bienenzucht des Typs, bei dem die Wabenstrukturen aus flüssigem Wachs hergestellt werden, das einer Anordnung von zwei Endlosbändern (1, 2) zugeführt wird, die zueinander beabstandete, elastische Silikonkerne (7) tragen, die die Zellen und die Wände (20, 21) der Wabenstruktur bestimmen, wobei diese am Ende geschnitten werden kann, sobald die Wabenstrukturen abgekühlt sind, **dadurch gekennzeichnet, dass** die Bänder (1, 2), die die Silikonkerne (7) tragen, unterschiedlich von der hergestellten Wabenstruktur entfernt werden, indem lediglich eines der Bänder entsprechend einer der Wabenstrukturflächen gebogen wird und indem durch allmähliche Wirkung pulsierender Magnetfelder auf das andere der Bänder, die die Silikonkerne (7) tragen, die Wabenstruktur allmählich entfernt wird, ohne das deren Wände zerstört werden.

2. Verfahren nach Anspruch 1, **dadurch gekennzeichnet, dass** das Entfernen des Bandes (1) mit Hilfe pulsierender Magnetfeldes nach dem Entfernen des Bandes (1) erfolgt, das der gegenüberliegenden Seite der Wabenstruktur entspricht.

3. Verfahren nach Anspruch 1, **dadurch gekennzeichnet, dass** das Band, das die pulsierenden elektrischen Felder empfängt, das obere Band der Wabenstruktur in der Zone ist, in der es sich von der Zone fortbewegt, die mit dem unteren Band übereinstimmt.

4. Vorrichtung zum Herstellen einer Wabenstruktur für die Bienenzucht mit einem Verfahren nach Anspruch 1, **dadurch gekennzeichnet, dass** sie eine Reihe von Elektromagneten (16, 16', 16") enthält, die auf ein Band (1) wirken, das elastische Kerne (7) trägt, die zu entfernen sind, und die eine Wirkung eines pulsierenden Magnetfeldes darauf ausüben, um dadurch das Band allmählich von der Wabenstruktur zu entfernen.

5. Vorrichtung zum Herstellen von Wabenstrukturen für die Bienenzucht nach Anspruch 4, **dadurch gekennzeichnet, dass** jede der Anordnungen von Elektromagneten einen zentralen Kern (17) und zwei seitliche Halterungen (18, 19) hat, wobei der zentrale Kern (17) geringfügig weiter vom Band (1) entfernt ist als die seitlichen Halterungen, damit das Band (1) durch die Wirkung des Magnetfeldes quer gebogen werden kann.

6. Vorrichtung zum Herstellen von Wabenstrukturen für die Bienenzucht nach Anspruch 4, **dadurch gekennzeichnet, dass** das elastische Band (1) mit einem flächigen Metallstreifen (9) auf der Seite gegenüberliegend den Magneten ausgestattet und mit einem Eisenpulver versehen ist, das in die Masse der Silikonkerne (7) eingebettet ist, um die Wirkung der Magnetfelder zu verbessern.

## Revendications

1. Procédé pour fabriquer des nids d'abeilles pour l'apiculture, du type dans lequel les nids d'abeilles sont produits à partir de cire liquide qui est alimentée à partir d'un ensemble de deux courroies sans fin (1, 2) supportant des noyaux en silicone élastiques (7) mutuellement espacés qui déterminent les alvéoles et les parois (20, 21) du nid d'abeilles, lui permettant d'être coupé à la fin, une fois que les nids d'abeilles ont été refroidis, **caractérisé en ce que** les courroies (1, 2) supportant les noyaux en silicone (7) sont retirées différemment du nid d'abeilles fabriqué, simplement en fléchissant l'une des courroies correspondant à l'une des faces du nid d'abeilles et par l'action progressive des champs magnétiques pulsés sur l'autre courroie supportant les noyaux en silicone (7), le nid d'abeilles étant progressivement retiré sans casser ses parois.

2. Procédé selon la revendication 1, **caractérisé en ce que** le retrait de la courroie (1) au moyen des champs magnétiques pulsés est réalisé après le retrait de la courroie (1) correspondant à la face opposée du nid d'abeilles.

3. Procédé selon la revendication 1, **caractérisé en ce que** la courroie qui reçoit les champs électriques pulsés est la courroie supérieure du nid d'abeilles, dans la zone où elle avance à partir la zone correspondant à la courroie inférieure.

4. Dispositif pour fabriquer un nid d'abeilles pour l'apiculture avec un procédé selon la revendication 1, **caractérisé en ce qu'**il comprend une rangée d'électroaimants (16, 16', 16"), qui agissent sur une courroie (1) supportant des noyaux élastiques (7) à retirer, et qui exercent une action des champs magnétiques pulsés sur celle-ci, retirant ainsi progressivement la courroie du nid d'abeilles.

5. Dispositif pour fabriquer des nids d'abeilles pour l'apiculture selon la revendication 4, **caractérisé en ce que** chacun des ensembles d'électroaimants a un noyau central (17) et deux supports latéraux (18, 19), le noyau central (17) étant légèrement plus espacé de la courroie (1) que les supports latéraux, pour permettre à la courroie (1) d'être fléchie de manière transversale par l'effet du champ magnétique.

6. Dispositif pour la fabrication de nids d'abeilles pour l'apiculture, selon la revendication 4, **caractérisé en ce que** la courroie élastique (1) est prévue avec une sangle métallique laminaire (9) sur la face opposée aux aimants et est prévue avec une poudre de fer qui est noyée dans la masse des noyaux en silicone (7), afin d'améliorer l'action des champs magnétiques.
